# EUROPÄISCHE PATENTANMELDUNG

(11) **EP 3 862 573 A1**
(43) Veröffentlichungstag der Anmeldung: **11.08.2021**
(21) Anmeldenummer: 20156161.0
(22) Anmeldetag: 07.02.2020
(51) Int. Cl.: F04D 29/42, F04D 29/68

(54) **STABILISATORKANAL EINES VERDICHTERS**

(71) Anmelder: ABB Schweiz AG, 5400 Baden (CH)
(72) Erfinder: Rusch, Daniel, 5430 Wettingen (CH)
(74) Vertreter: Zimmermann & Partner Patentanwälte mbB

(57) **Zusammenfassung**

Die Erfindung betrifft einen Stabilisatorkanal (10), insbesondere eines Radialverdichters oder Diagonalverdichters, mit einem ringförmigen Stabilisatorraum (12), welcher einen Hauptströmungskanal (13) im Ansaugbereich eines Verdichterrades (21) umgibt und durch einen Ringsteg (14) gegenüber dem Hauptströmungskanal (13) abgegrenzt ist. Der ringförmige Stabilisatorraum (12) ist schaufellos und steht über einen stromabliegenden Eintrittskanal (15) und eine stromaufliegende Austrittsöffnung (16) in Verbindung mit dem Hauptströmungskanal (13). In dem stromabliegenden Eintrittskanal (15) sind mehrere Strömungsleitelemente (17) angeordnet. Ferner betrifft die Erfindung einen Verdichter, insbesondere einen Radialverdichter oder Diagonalverdichter, mit dem erfindungsgemäßen Stabilisatorkanal (10) sowie einen Turbolader mit dem Verdichter.

## Beschreibung

### TECHNISCHES GEBIET

Die Erfindung bezieht sich auf das Gebiet der Verdichter, insbesondere der Radialverdichter und Diagonalverdichter. Insbesondere betrifft die Erfindung einen Stabilisatorkanal am Verdichtereintritt zur Verbesserung der Kennfeldbreite und der Kennliniensteigung einer Verdichterstufe.

### TECHNISCHER HINTERGRUND

Abgasturbolader werden zur Leistungssteigerung von Brennkraftmaschinen, insbesondere Hubkolbenmotoren, eingesetzt. Dabei besitzt ein Abgasturbolader üblicherweise einen Radial- oder Diagonalverdichter und eine Radial- oder Axialturbine.

Der fahrbare Betriebsbereich von Radial- und Diagonalverdichtern ist hin zu kleineren Massenströmen durch die Pumpgrenze / Strömungsinstabilität limitiert: Beim Androsseln des Verdichters verschlechtern sich die Inzidenz-Winkel zunehmend, bis die Strömung ablöst und es zum Pumpen kommt. Der zulässige Inzidenz-Winkelbereich, bei welchem die Strömung noch anliegt, nimmt dabei mit steigender Strömungsmachzahl ab. Das heißt die Kennfeldbreite nimmt bei Stufen mit hohem Druckverhältnis und/oder hohem Schluckvermögen tendenziell ab.

Als Kennlinien-Stabilisierungs-Maßnahme kann dabei über der Radkontur des Verdichterrades, parallel zum Ansaugkanal, ein Bypass in Form eines Ringhohlraumes innerhalb des Verdichtergehäuses vorgesehen werden. Ein derartiger Bypass ist auch als Stabilisatorraum oder Rezirkulator bekannt. Durch die Verwendung eines Rezirkulators kann der Massenstrom am Verdichterradeintritt in Pumpgrenznähe künstlich erhöht werden. Aus dem Verdichterrad wird ein Teil des Massenstroms in den Seitenraum (Bypass) abgezweigt. Dieser Massenstrom weist eine starke Drallkomponente auf (in Drehrichtung des Impellers - Mitdrall). Dieser Mitdrall führt dazu, dass der Arbeitsumsatz im Verdichter reduziert wird, was zu flach verlaufenden Kennlinien in Pumpgrenznähe führt.

Flach verlaufende Kennlinien in Pumpgrenznähe können bei Anwendungen mit Druckpulsationen (z.B. bedingt durch die Ventilbewegung des aufgeladenen Verbrennungsmotors) zu unerwartetem Pumpen führen. Aus diesem Grund besteht die Anforderung einer Mindestdruckerhöhung zwischen Betriebspunkt und dem Pumpgrenzpunkt auf der Betriebsdrehzahllinie bereitzustellen. Diese Forderung kann bei Stufen mit hohem Druckverhältnis und konventionellem Bypass / Stabilisatorkanal kaum noch erfüllt werden - aufgrund des hohen Arbeitsumsatzes und des flachen Arbeitsziffer-Verlaufs über dem Massenstrom bei konstanter Drehzahl.

### KURZE DARSTELLUNG DER ERFINDUNG

Die Aufgabe der vorliegenden Erfindung besteht darin, einen Stabilisatorkanal eines Verdichters, insbesondere eines Radialverdichters oder Diagonalverdichters, bereitzustellen, der mindestens hinsichtlich einer der aus dem Stand der Technik bekannten Nachteile verbessert ist. Des Weiteren besteht die Aufgabe der vorliegenden Erfindung darin, einen verbesserten Verdichter und einen verbesserten Turbolader bereitzustellen.

Zur Lösung der obengenannten Aufgaben wird ein Stabilisatorkanal eines Verdichters, insbesondere eines Radialverdichters oder Diagonalverdichters, gemäß dem unabhängigen Anspruch 1 bereitgestellt. Ferner werden ein Verdichter mit einem Stabilisatorkanal gemäß den hierein beschriebenen Ausführungsformen sowie ein Turbolader mit einem derartigen Verdichter bereitgestellt.

Weitere Aspekte, Vorteile und Merkmale der vorliegenden Erfindung sind den abhängigen Patentansprüchen, der Beschreibung und den beiliegenden Figuren zu entnehmen.

Gemäß einem Aspekt der Erfindung wird ein Stabilisatorkanal eines Verdichters, insbesondere eines Radialverdichters oder Diagonalverdichters, bereitgestellt. Der Stabilisatorkanal umfasst einen ringförmigen Stabilisatorraum, welcher einen Hauptströmungskanal im Ansaugbereich eines Verdichterrades umgibt und durch einen Ringsteg gegenüber dem Hauptströmungskanal abgegrenzt ist. Der ringförmige Stabilisatorraum ist schaufellos und steht über einen stromabliegenden Eintrittskanal und eine stromaufliegende Austrittsöffnung in Verbindung. In dem stromabliegenden Eintrittskanal sind mehrere Strömungsleitelemente angeordnet.

Somit wird vorteilhafterweise ein Stabilisatorkanal bereitgestellt, der eine Verbesserung der Kennfeldbreite und der Kennliniensteigung einer Verdichterstufe ermöglicht. Ferner, kann durch den erfindungsgemäßen Stabilisatorkanal mit Strömungsleitelementen im stromabliegenden Eintrittskanal ein Stabilisatorkanal bereitgestellt werden, welcher Vorteile gegenüber konventionellen aus dem Stand der Technik bekannten Stabilisatoren hinsichtlich Bauteilintegration, Containment-Eigenschaften und Herstellungskosten aufweist.

Gemäß einem zweiten Aspekt der Erfindung wird ein Verdichter, insbesondere ein Radialverdichter oder ein Diagonalverdichter, bereitgestellt der ein Verdichterrad und einen Stabilisatorkanal gemäß einer der hierein beschriebenen Ausführungsformen umfasst. Somit kann vorteilhafterweise ein Verdichter mit verbesserter Kennfeldbreite und Kennliniensteigung bereitgestellt werden.

Ein dritter Aspekt der Erfindung betrifft einen Turbolader mit einem Verdichter gemäß einer der hierein beschriebenen Ausführungsformen, so dass vorteilhafterweise ein Turbolader bereitgestellt wird, der gegenüber dem Stand der Technik verbessert ist.

### KURZBESCHREIBUNG DER FIGUREN

Im Weiteren soll die Erfindung anhand von in Figuren dargestellten Ausführungsbeispielen erläutert werden, aus denen sich weitere Vorteile und Abwandlungen ergeben. Hierbei zeigen:
- Figur 1: eine schematische Ansicht eines Stabilisatorkanals gemäß dem Stand der Technik;
- Figur 2: eine schematische Ansicht eines Stabilisatorkanals gemäß hierin beschriebenen Ausführungsformen;
- Figuren 3a und 3b: schematische Ansichten eines Stabilisatorkanals gemäß weiteren hierin beschriebenen Ausführungsformen;
- Figur 4a: eine schematische Ansicht eines Stabilisatorkanals gemäß einer weiteren hierin beschriebenen Ausführungsform;
- Figur 4b: eine vergrößerte Ansicht eines Ausschnitts von Figur 4a;
- Figuren 5 und 6: schematische Ansichten eines Eintrittskanals eines Stabilisatorkanals gemäß weiteren hierin beschriebenen Ausführungsformen;
- Figur 7: eine schematisch Ansicht einer Konfiguration von Strömungsleitelementen zum Erzeugen eines Strömungsgegendralls beim Durchströmen der Leitelemente; und
- Figur 8: eine schematisch Ansicht einer Konfiguration von Strömungsleitelementen zum Abbau eines Strömungsdralls beim Durchströmen der Leitelemente

### DETAILLIERTE BESCHREIBUNG DER FIGUREN

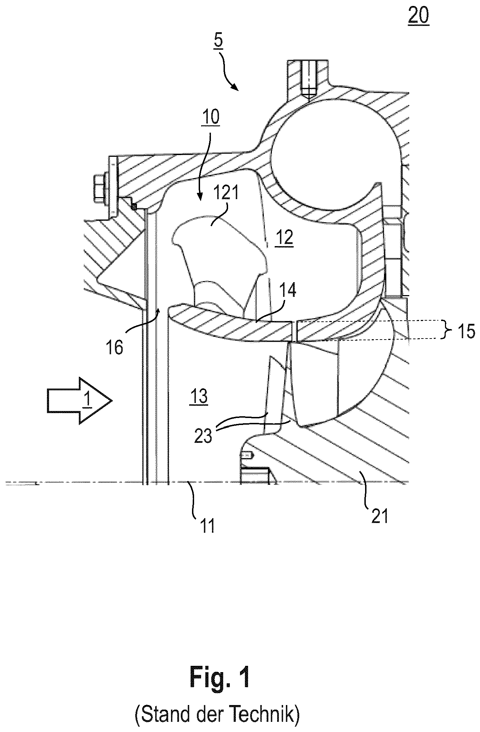

Figur 1 zeigt eine schematische Ansicht eines Stabilisatorkanals 10 gemäß dem Stand der Technik. Insbesondere zeigt Figur 1 einen entlang der Rotationsachse 11 des Verdichterrades 21 geführten Schnitt durch ein Gehäuse eines Radialverdichters, wie er etwa zum Verdichten von Luft in Abgasturboladern eingesetzt wird. In dem Verdichtergehäuse 5 ist ein Stabilisatorraum 12 angeordnet. Der Stabilisatorraum 12 ist über einen Eintrittskanal 15 und eine Austrittsöffnung 16 mit dem Hauptströmungskanal 13 verbunden. Der Stabilisatorraum 12 ist gegenüber dem Hauptströmungskanal 13 mittels eines Ringstegs 14 abgegrenzt. In dem Stabilisatorraum 12 sind Halterippen 121 angeordnet, die den Ringsteg 14 mit dem Verdichtergehäuse verbinden.

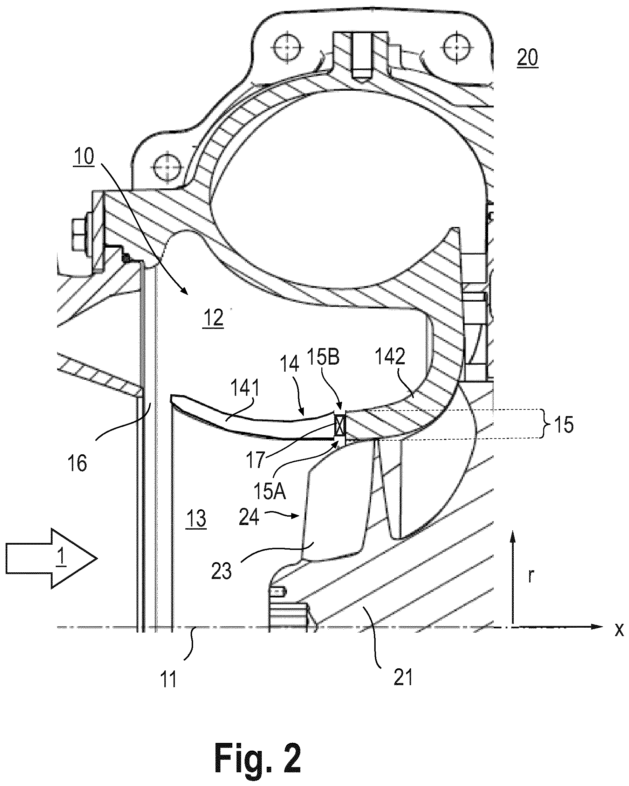

Mit Bezugnahme auf die Figuren 2 bis 8 wird ein Stabilisatorkanal eines Verdichters gemäß der vorliegenden Offenbarung beschrieben. Der Verdichter kann ein Radialverdichter oder eine Diagonalverdichter sein.

Gemäß einer Ausführungsform, die mit anderen hierin beschriebenen Ausführungsformen kombiniert werden kann, umfasst der Stabilisatorkanal 10 einen ringförmigen Stabilisatorraum 12, welcher einen Hauptströmungskanal 13 im Ansaugbereich eines Verdichterrades 21 umgibt. Mit anderen Worten, typischerweise ist der Stabilisatorkanal 10 am Verdichtereintritt angeordnet. In diesem Zusammenhang sei angemerkt, dass in der vorliegenden Offenbarung unter einem "Stabilisatorkanal" insbesondere ein Kanal im Verdichtereintritt zu verstehen ist, der konfiguriert ist um eine Kennfeldbreite einer Verdichterstufe zu verbessern. Beispielsweise kann der Stabilisatorkanal 10 ein Rezirkulationskanal sein.

Ferner ist der ringförmige Stabilisatorraum 12 durch einen Ringsteg 14 gegenüber dem Hauptströmungskanal 13 abgegrenzt, wie es beispielhaft in Figur 2 dargestellt ist. Der ringförmige Stabilisatorraum 12 ist schaufellos. Mit anderen Worten, in dem ringförmigen Stabilisatorraum 12 sind keine Schaufeln, insbesondere keine Strömungsleitschaufeln, angeordnet. Insbesondere, kann der ringförmige Stabilisatorraum 12 auch strebenlos sein. Mit anderen Worten, der ringförmige Stabilisatorraum 12 kann schaufellos und strebenlos sein, so dass weder Strömungsleitschaufeln noch Streben in dem ringförmigen Stabilisatorraum 12 vorhanden sind. Ferner steht der ringförmige Stabilisatorraum 12 mit dem Hauptströmungskanal 13 über einen stromabliegenden Eintrittskanal 15 und eine stromaufliegende Austrittsöffnung 16 in Verbindung. Der ringförmige Stabilisatorraum 12 kann rotationssymmetrisch ausgebildet sein.

Wie schematisch in Figur 2 dargestellt ist, sind in dem stromabliegenden Eintrittskanal 15 mehrere Strömungsleitelemente 17 angeordnet. Typischerweise sind die mehreren Strömungsleitelemente 17 umlaufend um eine zentrale Achse 11 des Hauptströmungskanals 13 angeordnet. Insbesondere können die mehreren Strömungsleitelemente 17 konzentrisch um die zentrale Achse 11 des Hauptströmungskanals 13 angeordnet sein. Ferner sei angemerkt, dass die Strömungsleitelemente 17 bündig mit der hauptströmungskanalseitige Eintrittsöffnung 15A des Eintrittskanals 15 und/oder bündig mit der stabilisatorraumseitige Austrittsöffnung 15B des Eintrittskanals 15 ausgeführt sein können. Alternativ können die Strömungsleitelemente 17 von der hauptströmungskanalseitige Eintrittsöffnung 15A des Eintrittskanals 15 und/oder von der stabilisatorraumseitige Austrittsöffnung 15B des Eintrittskanals beabstandet sein, wie es beispielhaft in Figur 2 dargestellt ist.

In der vorliegenden Offenbarung ist unter dem Begriff "Eintrittskanal" ein Kanal zu verstehen, der als Strömungseintrittskanal in den Stabilisatorraum dient. Typischerweise umfasst der Eintrittskanal 15 eine hauptströmungskanalseitige Eintrittsöffnung 15A und eine stabilisatorraumseitige Austrittsöffnung 15B, wie es beispielhaft in Figur 2 dargestellt ist.

In der vorliegenden Offenbarung beziehen sich die Begriffe "stromabliegend" und "stromaufliegend" auf die Hauptströmung im Hauptströmungskanal im Ansaugbereich eines Verdichterrades. Zum besseren Verständnis ist die Hauptströmungsrichtung 1 in den Figuren eingezeichnet. Gemäß einem Beispiel kann der Eintrittskanal 15 des Stabilisatorraums stromab zu einer Eintrittskante 24 des Verdichterrades 21 angeordnet sein, wie es in Figur 2 gezeigt ist. Die Austrittsöffnung 16 des Stabilisatorraums ist typischerweise stromauf der Eintrittskante 24 des Verdichterrades 21 angeordnet.

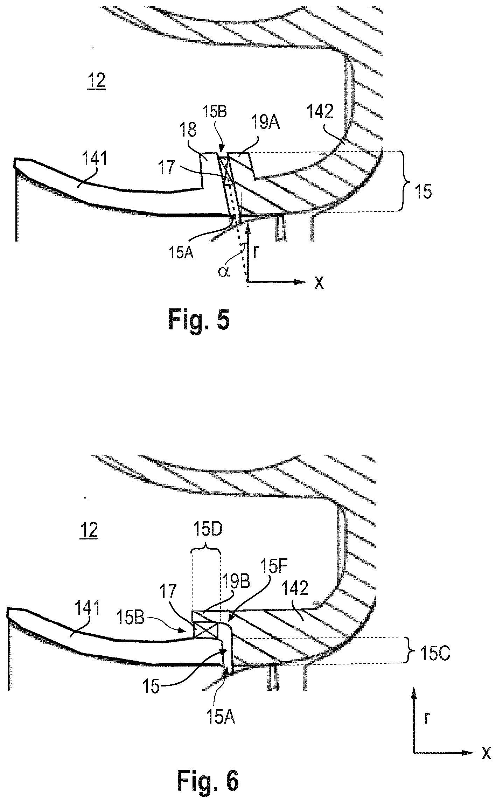

Gemäß einer Ausführungsform, die mit anderen hierin beschriebenen Ausführungsformen kombiniert werden kann, sind die mehreren Strömungsleitelemente 17 derart ausgebildet und angeordnet, um ein durchströmbares Umlenkgitter bereitzustellen. Beispielsweise kann das Umlenkgitter derart ausgebildet und angeordnet sein, um ein im Wesentlichen radial durchströmbares Umlenkgitter bereitzustellen. In der vorliegenden Offenbarung ist unter dem Begriff "im Wesentlichen radial" ein Winkelbereich von α=± 45° oder geringer, insbesondere von α=± 25° oder geringer, relativ zur radialen Richtung r zu verstehen. Wie es beispielhaft in Fig. 2 dargestellt ist erstreckt sich die radiale Richtung r senkrecht zur zentralen Achse 11. Gemäß einem Beispiel ist unter "im Wesentlichen radial" ein Winkelbereich von ±10° oder geringer relativ zur radialen Richtung r zu verstehen. Zum besseren Verständnis ist in Figur 5 beispielhaft ein um einen Winkel α geneigter Eintrittskanal 15 dargestellt, welcher unter die oben angegebene Definition von "im Wesentlichen radial" fällt. Der Winkel α befindet sich in der x-r-Ebene.

Gemäß einer Ausführungsform, die mit anderen hierin beschriebenen Ausführungsformen kombiniert werden kann, erstreckt sich der stromabliegende Eintrittskanal 15 im Wesentlichen in radialer Richtung, wie es beispielshaft in den Ausführungsformen in den Figuren 2 bis 5 dargestellt ist.

Gemäß einer alternativen Ausführungsform, die mit anderen hierin beschriebenen Ausführungsformen kombiniert werden kann, sind die mehreren Strömungsleitelemente 17 derart ausgebildet und angeordnet, um ein im Wesentlichen axial durchströmbares Umlenkgitter bereitzustellen, wie es beispielhaft in Figur 6 gezeigt ist. In der vorliegenden Offenbarung ist unter dem Begriff "im Wesentlichen axial" ein Winkelbereich von ± 45° oder geringer, insbesondere ± 25° oder geringer, relativ zur axialen Richtung x zu verstehen. Wie beispielhaft in Fig. 2 dargestellt ist erstreckt sich die axiale Richtung x entlang der zentralen Achse 11. Gemäß einem Beispiel ist unter "im Wesentlichen axial" ein Winkelbereich von ±10° oder geringer relativ zur axialen Richtung x zu verstehen. Ein im Wesentlichen axial durchströmbares Umlenkgitter kann beispielsweise durch eine Konfiguration des Eintrittskanals 15 des Stabilisatorraums und eine Anordnung der Strömungsleitelemente 17 gemäß Figur 6 bereitgestellt werden.

Gemäß einer Ausführungsform, die mit anderen hierin beschriebenen Ausführungsformen kombiniert werden kann, umfasst der stromabliegenden Eintrittskanal 15 einen sich im Wesentlichen radial erstreckenden Teil 15C und einen sich im Wesentlichen in axial erstreckenden Teil 15D umfasst, wie es beispielhaft in Figur 6 dargestellt ist. Zwischen dem sich im Wesentlichen radial erstreckenden Teil 15C und dem sich im Wesentlichen in axial erstreckenden Teil 15D befindet sich typischer Weise ein gekrümmter Übergangsbereich 15F.

Gemäß einer Ausführungsform, die mit anderen hierin beschriebenen Ausführungsformen kombiniert werden kann, ist der stromabliegenden Eintrittskanal 15 zwischen einem stromaufliegenden Teil 141 des Ringstegs 14 und einem stromabliegenden Teil 142 des Ringstegs 14 angeordnet.

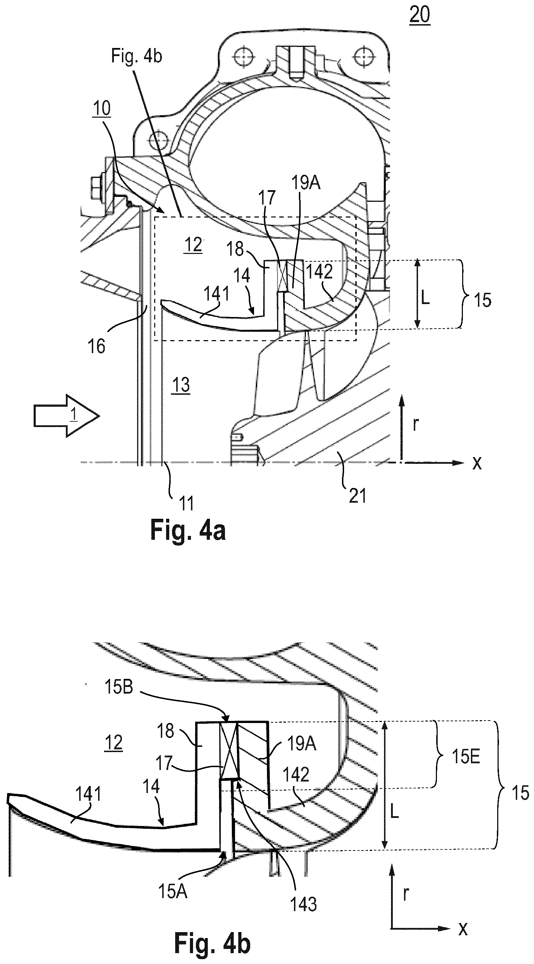

Gemäß einer Ausführungsform, die mit anderen hierin beschriebenen Ausführungsformen kombiniert werden kann, umfasst der stromaufliegenden Teil 141 des Ringstegs 14 einen sich im Wesentlichen in radialer Richtung erstreckenden ersten Fortsatz 18. Der stromabliegenden Teil 142 des Ringstegs 14 kann ebenso einen sich im Wesentlichen in radialer Richtung erstreckenden zweiten Fortsatz 19A umfassen, wie es beispielhaft in den Figuren 4a, 4b, und 5 dargestellt ist. Alternativ kann der stromabliegenden Teil 142 des Ringstegs 14 einen sich im Wesentlichen in axialer Richtung erstreckenden zweiten Fortsatz 19B umfassen, wie es beispielhaft in Fig. 6 dargestellt ist.

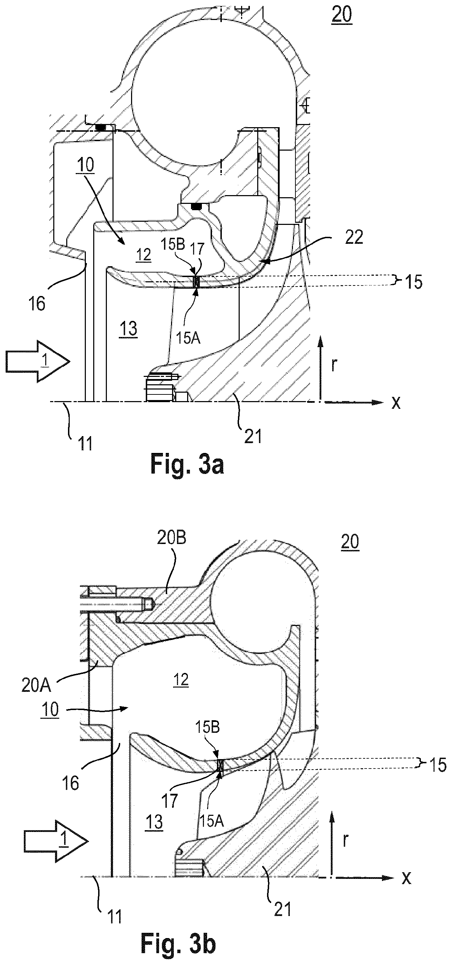

Gemäß einer Ausführungsform, die mit anderen hierin beschriebenen Ausführungsformen kombiniert werden kann, ist der Stabilisatorkanal 10 integraler Bestandteil eines Verdichtergehäuses, wie es beispielhaft in Figur 2 dargestellt ist. Alternativ kann der Stabilisatorkanal 10 in ein Einsatzteil 22 integriert sein, welches im Ansaugbereich eines Verdichters montierbar ist, wie es beispielhaft in Figur 3a dargestellt ist. Gemäß einem weiteren Beispiel kann der Stabilisatorkanal Bestandteil eines inneren Verdichtergehäuses 20A sein, wie es beispielhaft in Figur 3b dargestellt ist, in welcher ein Verdichter 20 mit einem inneren Verdichtergehäuse 20A und einem äußeren Verdichtergehäuse 20B gezeigt ist.

Gemäß einer Ausführungsform, die mit anderen hierin beschriebenen Ausführungsformen kombiniert werden kann, ist der stromaufliegende Teil 141 des Ringstegs 14 und der stromabliegende Teil 142 des Ringstegs 14 über die mehreren Strömungsleitelemente 17 verbunden, beispielsweise mittels einer Verschraubung. Die Verschraubung kann sich durch die Strömungsleitelemente 17 erstrecken. Es sei angemerkt, dass die Verschraubungen auch auf andere Weise ausgeführt werden können, d.h. so dass sie sich nicht durch die Strömungsleitelemente 17 erstecken. Alternativ oder zusätzlich können auch andere Verdingungsarten wie zum Beispiel Schrumpfen oder Klemmen verwendet werden.

Gemäß einer Ausführungsform, die mit anderen hierin beschriebenen Ausführungsformen kombiniert werden kann, sind die mehreren Strömungsleitelemente 17 als separate Bauteile ausgeführt. Gemäß einer alternative Ausführungsform, die mit anderen hierin beschriebenen Ausführungsformen kombiniert werden kann, sind die mehreren Strömungsleitelemente 17 integral (einteilig) mit dem stromaufliegenden Teil 141 des Ringstegs 14 und/oder integral (einteilig) mit dem stromabliegenden Teil 142 des Ringstegs 14 ausgebildet.

Gemäß einer Ausführungsform, die mit anderen hierin beschriebenen Ausführungsformen kombiniert werden kann, weist der stromabliegenden Teil 142 des Ringstegs 14 einen Zentrierabsatz 143 auf. Alternative oder zusätzlich kann der stromaufliegenden Teil 141 des Ringstegs 14 einen Zentrierabsatz aufweisen (nicht explizit dargestellt). Der Zentrierabsatz kann zylindrisch oder konisch ausgeführt sein.

Gemäß einer Ausführungsform, die mit anderen hierin beschriebenen Ausführungsformen kombiniert werden kann, weisen die mehreren Strömungsleitelemente 17 jeweils einen Zentriersitz auf, der ausgebildet ist, um die Strömungsleitelemente 17 in dem Eintrittskanal 15 umlaufend, insbesondere konzentrisch, um die zentralen Achse 11 des Hauptströmungskanals 13 anzuordnen.

Gemäß einer Ausführungsform, die mit anderen hierin beschriebenen Ausführungsformen kombiniert werden kann, ist mindestens eines, insbesondere mindestens die Hälfte oder alle, der mehreren Strömungsleitelemente 17 aus Curtis-artigen Schaufelprofilen gebildet. Insbesondere kann mindestens eines, insbesondere mindestens die Hälfte oder alle der mehreren Strömungsleitelemente 17 prismatische, Curtis-artige Schaufeln sein. Typischerweise, sind die Strömungsleitelemente 17 als radiale Umlenkschaufeln ausgebildet. Eine Ausführung der Strömungsleitelemente aus Curtis-artigen Schaufelprofilen, insbesondere Strömungsleitelemente in Form von prismatischen Curtis-artigen Schaufeln, hat den Vorteil, dass diese relativ dick ausgeführt werden können, so dass eine bessere Verbindung des stromaufliegenden Teil 141 des Ringstegs 14 mit dem stromabliegenden Teil 142 des Ringstegs 14 über derartige Leitelemente ermöglicht wird, beispielsweise mittels Verschraubung oder anderen geeigneten Verbindungsarten.

Gemäß einer Ausführungsform, die mit anderen hierin beschriebenen Ausführungsformen kombiniert werden kann, sind die mehrere Strömungsleitelemente 17 in einem Ausströmbereich des Eintrittskanals 15 des Stabilisatorraums angeordnet, wie es beispielhaft in den Figuren 4a und 4b dargestellt ist. Unter dem Ausströmbereich des Eintrittskanals 15 ist der Bereich des Eintrittskanals 15 zu verstehen, welcher sich auf der Seite der stabilisatorraumseitigen Austrittsöffnung 15B befindet. Der Ausströmbereich kann sich beispielsweise über die Hälfte oder weniger der Eintrittskanallänge L erstrecken. Zum besseren Verständnis ist der Ausströmbereich 15E des Eintrittskanals 15 in Figur 4b beispielhaft dargestellt. Eine Anordnung der Strömungsleitelemente 17 in einem Ausströmbereich des Eintrittskanals 15 kann sich günstig auf Strömungsgeschwindigkeiten und Schaufelschwingungsanregung auswirken.

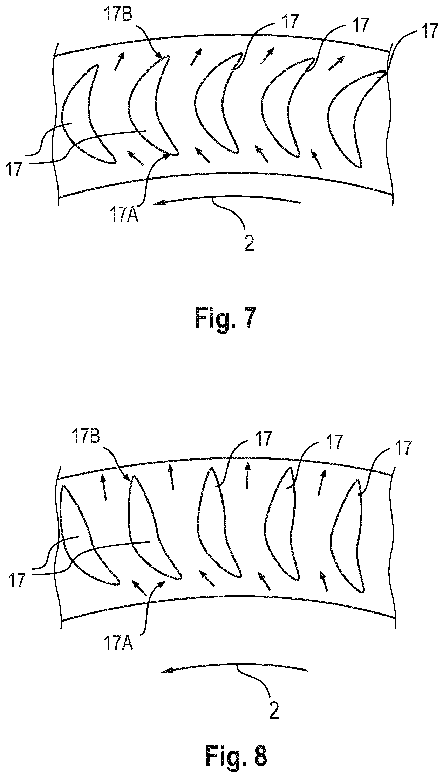

Gemäß einer Ausführungsform, die mit anderen hierin beschriebenen Ausführungsformen kombiniert werden kann, weisen die Strömungsleitelemente 17 jeweils ein einströmseitiges Ende 17A und ein abströmseitiges Ende 17B auf, wobei die jeweiligen abströmseitigen Enden 17B der Strömungsleitelemente 17 relativ zu den jeweiligen einströmseitigen Enden 17A der Strömungsleitelemente 17 in Umfangsrichtung geneigt sind, so dass beim Durchströmen ein Drall abgebaut wird, wie es beispielhaft durch die Pfeile zwischen den einströmseitigen Enden 17A und den abströmseitigen Enden 17B in Figur 8 dargestellt ist.

Alternativ können die jeweiligen abströmseitigen Enden 17B der Strömungsleitelemente 17 relativ zu den jeweiligen einströmseitigen Enden 17A der Strömungsleitelemente 17 in Umfangsrichtung derart geneigt sein, dass ein Gegendrall erzeugt wird, wie es beispielhaft durch die Pfeile zwischen den einströmseitigen Enden 17A und den abströmseitigen Enden 17B in Figur 7 dargestellt ist. Zum besseren Verständnis ist die Rotationsrichtung 2 des Verdichterrades in den Figuren 7 und 8 dargestellt. Die Rotation des Verdichterrades führt zu einer mit Drall beaufschlagten Strömung.

Gemäß einem zweiten Aspekt der vorliegenden Offenbarung wird ein Verdichter, insbesondere ein Radialverdichter oder ein Diagonalverdichter, bereitgestellt der ein Verdichterrad 21 und einen Stabilisatorkanal 10 gemäß einer der hierein beschriebenen Ausführungsformen umfasst. Gemäß einer Ausführungsform, die mit anderen hierin beschriebenen Ausführungsformen kombiniert werden kann, umfasst das Verdichterrad 21 im Bereich der Eintrittsöffnung 15A eine Anzahl N₁ an Verdichterradschaufeln 23. Eine Anzahl N₂ der Leitelemente in dem stromabliegenden Eintrittskanal 15 ist N₂ ≥ 1.5×N₁. Dies ist vorteilhaft um die Geräusch- und Schwingungsentwicklung im Betrieb des Verdichters zu reduzieren.

Ein dritter Aspekt der Erfindung betrifft einen Turbolader mit einem Verdichter gemäß einer der hierein beschriebenen Ausführungsformen, so dass vorteilhafterweise ein Turbolader bereitgestellt wird der gegenüber dem Stand der Technik verbessert ist.

### BEZUGZEICHENLISTE

- 1: Hauptströmungsrichtung
- 2: Rotationsrichtung des Verdichterrades
- 5: Verdichtergehäuse
- 10: Stabilisatorkanal
- 11: zentrale Achse / Rotationsachse des Verdichterrades
- 12: ringförmiger Stabilisatorraum
- 121: Strebe
- 13: Hauptströmungskanal
- 14: Ringsteg
- 141: stromaufliegender Teil des Ringstegs
- 142: stromabliegender Teil des Ringstegs
- 143: Zentrierabsatz
- 15: Eintrittskanal des Stabilisatorraums
- 15A: hauptströmungskanalseitige Eintrittsöffnung des Eintrittskanals
- 15B: stabilisatorraumseitige Austrittsöffnung des Eintrittskanals
- 15C: im Wesentlichen radial erstreckender Teil des Eintrittskanals
- 15D: im Wesentlichen axial erstreckender Teil des Eintrittskanals
- 15E: Ausströmbereich des Eintrittskanals
- 15F: Übergangsbereich
- 16: Austrittsöffnung des Stabilisatorraums
- 17: Strömungsleitelemente
- 17A: einströmseitiges Ende der Strömungsleitelemente
- 17B: ausströmseitiges Ende der Strömungsleitelemente
- 18: im Wesentlichen in radialer Richtung erstreckender erster Fortsatz
- 19A: im Wesentlichen in radialer Richtung erstreckender zweiter Fortsatz
- 19B: im Wesentlichen in axialer Richtung erstreckender zweiter Fortsatz
- 20: Verdichter
- 20A: Inneres Verdichtergehäuse
- 20B: Äußeres Verdichtergehäuse
- 21: Verdichterrad
- 22: Einsatzteil
- 23: Verdichterradschaufeln
- 24: Eintrittskante des Verdichterrades
- r: radiale Richtung
- x: axiale Richtung
- L: Länge des Eintrittskanals
- α: Winkel in der x-r-Ebene zur Erläuterung "im Wesentlichen radial"

## Patentansprüche

1. Stabilisatorkanal (10) eines Verdichters, insbesondere eines Radialverdichters oder Diagonalverdichters, mit einem ringförmigen Stabilisatorraum (12), welcher einen Hauptströmungskanal (13) im Ansaugbereich eines Verdichterrades (21) umgibt und durch einen Ringsteg (14) gegenüber dem Hauptströmungskanal (13) abgegrenzt ist, wobei der ringförmige Stabilisatorraum (12) schaufellos ist und über einen stromabliegenden Eintrittskanal (15) und eine stromaufliegende Austrittsöffnung (16) in Verbindung steht, wobei in dem stromabliegenden Eintrittskanal (15) mehrere Strömungsleitelemente (17) angeordnet sind.

2. Stabilisatorkanal nach Anspruch 1, wobei die mehreren Strömungsleitelemente (17) ausgebildet und angeordnet sind, um ein durchströmbares Umlenkgitter, insbesondere ein im Wesentlichen radial durchströmbares Umlenkgitter oder ein im Wesentlichen axial durchströmbares Umlenkgitter, bereitzustellen.

3. Stabilisatorkanal nach Anspruch 1 oder 2, wobei sich der stromabliegenden Eintrittskanal (15) im Wesentlichen in radialer Richtung erstreckt, oder wobei der stromabliegenden Eintrittskanal (15) einen sich im Wesentlichen radial erstreckenden Teil (15C) und einen sich im Wesentlichen axial erstreckenden Teil (15D) umfasst.

4. Stabilisatorkanal nach einem der Ansprüche 1 bis 3, wobei die mehreren Strömungsleitelemente (17) umlaufend, insbesondere konzentrisch, um eine zentrale Achse (11) des Hauptströmungskanals (13) angeordnet sind.

5. Stabilisatorkanal nach einem der Ansprüche 1 bis 4, wobei der stromabliegende Eintrittskanal (15) zwischen einem stromaufliegenden Teil (141) des Ringstegs (14) und einem stromabliegenden Teil (142) des Ringstegs (14) angeordnet ist.

6. Stabilisatorkanal nach Anspruch 4, wobei der stromaufliegende Teil (141) des Ringstegs (14) einen sich im Wesentlichen in radialer Richtung erstreckenden ersten Fortsatz (18) und der stromabliegende Teil (142) des Ringstegs (14) einen sich im Wesentlichen in radialer Richtung erstreckenden zweiten Fortsatz (19A) umfassen, oder wobei der stromabliegende Teil (142) des Ringstegs (14) einen sich im Wesentlichen in axialer Richtung erstreckenden zweiten Fortsatz (19B) umfasst.

7. Stabilisatorkanal nach einem der Ansprüche 1 bis 6, wobei der Stabilisatorkanal integraler Bestandteil eines Verdichtergehäuses ist, oder wobei der Stabilisatorkanal in ein Einsatzteil (22) integriert ist, welches im Ansaugbereich eines Verdichters montierbar ist, oder wobei der Stabilisatorkanal Bestandteil eines inneren Verdichtergehäuses (20A) ist.

8. Stabilisatorkanal nach einem der Ansprüche 5 bis 7, wobei der stromaufliegende Teil (141) des Ringstegs (14) und der stromabliegende Teil (142) des Ringstegs (14) über die mehreren Strömungsleitelemente (17) verbunden, insbesondere verschraubt, sind.

9. Stabilisatorkanal nach einem der Ansprüche 5 bis 8, wobei die mehreren Strömungsleitelemente (17) als separate Bauteile ausgeführt sind.

10. Stabilisatorkanal nach einem der Ansprüche 5 bis 8, wobei die mehreren Strömungsleitelemente (17) integral mit dem stromaufliegenden Teil (141) des Ringstegs (14) und/oder integral mit dem stromabliegenden Teil (142) des Ringstegs (14) ausgebildet sind.

11. Stabilisatorkanal nach einem der Ansprüche 5 bis 10, wobei der stromabliegenden Teil (142) des Ringstegs (14) und/oder der stromaufliegenden Teil (141) des Ringstegs (14) einen Zentrierabsatz (143), insbesondere einen zylindrischen oder konischen Zentrierabsatz, aufweisen.

12. Stabilisatorkanal nach einem der Ansprüche 1 bis 11, wobei die mehreren Strömungsleitelemente (17) jeweils einen Zentriersitz aufweisen, der ausgebildet ist, um die Strömungsleitelemente (17) in dem Eintrittskanal (15) umlaufend, insbesondere konzentrisch, um die zentralen Achse (11) des Hauptströmungskanals (13) anzuordnen.

13. Stabilisatorkanal nach einem der Ansprüche 1 bis 12, wobei mindestens eines, insbesondere mindestens die Hälfte oder alle der mehreren Strömungsleitelemente (17) aus Curtis-artigen Schaufelprofilen gebildet sind, insbesondere wobei mindestens eines, insbesondere mindestens die Hälfte oder alle der mehreren Strömungsleitelemente (17) prismatische, Curtis-artige Schaufeln sind.

14. Stabilisatorkanal nach einem der Ansprüche 1 bis 13, wobei die mehrere Strömungsleitelemente (17) in einem Ausströmbereich (15E) des Eintrittskanals (15) des Stabilisatorraums angeordnet sind.

15. Stabilisatorkanal nach einem der Ansprüche 1 bis 14, wobei die Strömungsleitelemente (17) jeweils ein einströmseitiges Ende (17A) und ein abströmseitiges Ende (17B) aufweisen, wobei die abströmseitigen Enden der Strömungsleitelemente (17) relative zu den einströmseitigen Enden (17A) der Strömungsleitelemente (17) in Umfangsrichtung geneigt sind, so dass beim Durchströmen ein Drall abgebaut wird oder ein Gegendrall erzeugt wird.

16. Verdichter (20), insbesondere Radialverdichter oder Diagonalverdichter, mit einem Verdichterrad (21) und einem Stabilisatorkanal (10) gemäß einem der Ansprüche 1 bis 14, insbesondere wobei das Verdichterrad (21) im Bereich der Eintrittsöffnung (15A) des Eintrittskanals (15) eine Anzahl N₁ an Verdichterradschaufeln (23) umfasst und eine Anzahl N₂ der Leitelemente N₂ ≥ 1.5×N₁ ist.

17. Turbolader mit einem Verdichter (20) nach Anspruch 16.
